# FASCICULE DE BREVET EUROPEEN

(11) **EP 1 708 327 B1**
(45) Date de publication et mention de la délivrance du brevet: **17.12.2014**
(21) Numéro de dépôt: 06290487.5
(22) Date de dépôt: 28.03.2006
(51) Int. Cl.: H02B 1/30

(54) **Armoire pour appareillage électrique**
Schaltschrank
Electrical cabinet

(30) Priorité: 31.03.2005 FR 0503163
(43) Date de publication de la demande: 04.10.2006
(73) Titulaire: Legrand France, 87000 Limoges (FR); Legrand SNC, 87000 Limoges (FR)
(72) Inventeur: Houard, Fabrice, 76750 Buchy (FR)
(74) Mandataire: Santarelli

(56) Documents cités:
- WO-A-01/18926
- DE-A1- 2 901 214
- FR-A- 1 443 292

## Description

### DOMAINE DE L'INVENTION

L'invention a trait au domaine général des armoires pour appareillage électrique.

L'invention concerne plus particulièrement une telle armoire formée d'une enveloppe présentant une ouverture délimitée par un cadre recevant généralement une porte, cette enveloppe comportant deux panneaux latéraux reliés chacun par l'une de leurs extrémités à un premier panneau et par l'autre de leurs extrémités à un deuxième panneau. Une telle armoire se trouve par exemple décrite dans les brevets DE 29 01 214 et WO 01/18926.

Lorsque l'armoire est installée, les panneaux latéraux forment les montants verticaux de l'armoire tandis que les premier et deuxième panneaux, généralement disposés horizontalement, froment respectivement le socle et le toit de l'armoire.

### ARRIERE-PLAN TECHNOLOGIQUE

On connaît de telles armoires pour équipement électrique comportant deux montants latéraux dont l'extrémité inférieure de chacun est fixée sur un socle destiné à reposer ou à être fixé sur le sol et dont l'extrémité supérieure de chacun est fixée à un toit.

Ces armoires connues sont prévues pour être avantageusement produites en gammes comportant des armoires de différentes hauteurs et de différentes largeurs. Le fait que l'enveloppe soit constituée de panneaux fixés les uns aux autres permet de produire une gamme d'armoires de même hauteur et de largeurs différentes en employant un seul et même type de montants latéraux ainsi qu'une gamme d'armoires de même largeur et de hauteurs différentes avec un seul et même type de panneaux formant le socle et le toit.

Afin de garantir l'étanchéité de ces armoires connues aux fluides d'écoulement, tels que la pluie, les jointures des liaisons entre les montants latéraux et le socle ou le toit sont disposées au niveau des montants latéraux de sorte que le toit ne présente aucune jointure sur son plan horizontal afin d'éviter toute infiltration de fluide. L'étanchéité des jointures placées sur le plan vertical des montants latéraux est plus facile à garantir et se fait généralement par un simple joint élastique.

Par ailleurs, comme toute armoire pour appareillage électrique, ces armoires connues sont prévues pour pouvoir être soulevées au moyen d'anneaux d'élinguage fixés sur le toit de l'armoire. Lors du soulèvement de l'armoire par ces anneaux d'élinguage, le poids supporté par le socle de l'armoire sollicite verticalement les fixations entre le socle et les montants latéraux et, de même, le poids supporté par les montants latéraux sollicite verticalement les fixations entre les montants latéraux et le toit de l'armoire. Les fixations des différents panneaux entre eux sont dimensionnées en conséquence du fait qu'elles sont amenées à supporter un poids important lors du levage.

### OBJET DE L'INVENTION

Le but de l'invention est d'améliorer ce type d'armoire pour appareillage électrique.

A cet effet, l'invention vise une armoire selon la revendication 1.

Dans une telle armoire pour appareillage électrique, l'emboîtement des tenons des premier et deuxième panneaux dans les panneaux latéraux permet à ces derniers de former une structure porteuse de l'ensemble de l'enveloppe de l'armoire.

Lorsqu'une telle armoire est soulevée, par exemple par des anneaux d'élinguage, le poids de l'armoire qui est supporté par les fixations des différents panneaux entre eux est ici transmis par des assemblages tenon-mortaise (le logements du panneau latéral formant des mortaises) et non par des moyens de fixation tels que des vis. Seuls des moyens de maintien en position de chaque tenon dans son logement sont prévus pour maintenir l'assemblage et non pour supporter le poids de l'armoire pendant les opérations de soulèvement de l'armoire.

Les moyens de maintien en position n'ont donc à supporter que des efforts latéraux beaucoup plus faibles que les efforts verticaux liés au poids de l'armoire et les dimensions de ces moyens de maintien peuvent être considérablement réduites ce qui permet, puisque les assemblages tenon-mortaise sont situés au niveau des coins de l'armoire, de rendre utilisable l'espace situé dans les coins de l'armoire comme volume utile et non uniquement pour y disposer les fixations des différents panneaux entre eux.

Une armoire aux coins ainsi libérés permet de maximiser l'espace interne utilisable de armoire pour un volume externe donné.

L'invention permet ainsi d'obtenir une armoire pour appareillage électrique qui, pour un important volume interne, présente un volume externe réduit.

En outre, le fait que les tenons soient creux permet de réaliser les panneaux équipés de leurs tenons par moulage.

Par ailleurs, le fait que chaque logement destiné à recevoir un tenon soit formé par un coin du panneau latéral correspondant permet à chaque panneau latéral muni de son logement formant un coin de l'enveloppe d'être réalisé en une seule opération de moulage.

Au moins l'un desdits tenons peut être délimité par une paroi située sensiblement dans le prolongement de la paroi du premier ou deuxième panneau correspondant.

Ladite paroi peut par ailleurs comporter des trous traversants à travers lesquels sont disposés lesdits moyens de maintien en position, pour un meilleur maintien de l'ensemble.

Pour une meilleure rigidité, au moins l'un desdits tenons peut être délimité par une paroi transversale à ladite orientation générale.

De même, pour un meilleur maintien de l'ensemble, ladite paroi transversale peut comporter un trou traversant à travers lequel sont disposés lesdits moyens de maintien en position.

Selon une caractéristique préférée, au moins l'un desdits tenons comporte une rainure complémentaire d'une empreinte portée par le logement du panneau latéral correspondant, pour former un assemblage plus rigide.

Ladite rainure et ladite empreinte peuvent être orientées selon ladite orientation générale afin de garantir un emboîtement aisé lors du montage des différents panneaux de l'armoire.

Un trou traversant peut être pratiqué dans le fond de ladite rainure, lesdits moyens de maintien en position étant disposés à travers ledit trou traversant, pour un meilleur maintien de l'ensemble.

Selon une caractéristique préférée, au moins l'un desdits tenons comporte une pluralité de fûts présentant chacun un trou traversant, lesdits trous traversants débouchant tous sensiblement dans un même plan. Ces trous traversants peuvent permettre le passage d'équipements optionnels, tels que des anneaux d'élinguage. Ces fûts peuvent également servir d'appui plan pour un élément de fixation.

Selon une autre caractéristique préférée, au moins l'un desdits tenons comporte, au niveau de la jonction d'un panneau latéral et du premier ou du deuxième panneau correspondant, une rigole adaptée à l'écoulement d'un fluide en direction du cadre. Le cadre peut de plus comporter une gouttière communiquant avec la rigole. La gouttière peut également être reliée à une goulotte portée par un panneau latéral.

Ces caractéristiques préférées sont mises en oeuvre dans le cas d'une armoire étanche et permettent de canaliser un fluide s'infiltrant au niveau de ladite jonction. Contrairement à ce que l'on aurait pu penser, une telle armoire étanche peut donc présenter une jointure sur sa partie supérieure.

Ledit logement destiné à recevoir un tenon peut de plus être délimité par une nervure contre laquelle est disposé le tenon correspondant, pour une meilleure rigidité de l'assemblage du tenon dans son logement.

Ledit logement destiné à recevoir un tenon peut également comporter lui-même un logement recevant un insert de fixation.

Selon une caractéristique préférée, lesdits moyens de maintien comportent une vis traversant le tenon correspondant et fixée au panneau latéral correspondant, ce qui représente un moyen peu onéreux et efficace de mise en oeuvre.

Pour la fixation de l'appareillage électrique, l'armoire peut comporter en outre au moins un rail de fixation dans l'un des coins de l'enveloppe.

Pour réduire l'encombrement, ledit rail de fixation peut être fixé au tenon correspondant par lesdits moyens de maintien en position.

Selon une caractéristique préférée garantissant un levage sûr, l'armoire comporte en outre un anneau d'élinguage traversant le panneau latéral correspondant, le tenon correspondant et ledit rail de fixation.

De manière classique, ledit premier panneau peut être un panneau de socle et ledit deuxième panneau peut être un panneau de toit.

### BREVE DESCRIPTION DES FIGURES

D'autres caractéristiques et avantages de l'invention apparaissent à la lumière de la description qui va suivre d'un mode de réalisation préféré donné à titre d'exemple non limitatif, description faite en référence aux dessins annexés dans lesquels :
- la figure 1 est une vue en perspective d'une armoire pour appareillage électrique selon l'invention ;
- la figure 2 est un agrandissement de l'encart II de la figure 1;
- la figure 3 est un agrandissement de l'encart III de la figure 1 ;
- la figure 4 est une vue partielle éclatée montrant l'assemblage du coin supérieur droit de l'armoire de la figure 1 ;
- la figure 5 est une vue partielle éclatée, montrant l'assemblage du coin inférieur gauche de l'armoire de la figure 1 ;
- la figure 6 est une vue de face de l'armoire de la figure 1;
- la figure 7 est une vue de côté de l'armoire selon la coupe VII-VII matérialisée à la figure 6 ;
- la figure 8 est une vue de dessus selon la coupe VIII-VIII de la figure 6;
- la figure 9 est un agrandissement de l'encart IX-IX de la figure 7;
- les figures 10, 11, 12 et 13 sont des vues partielles, respectivement selon les coupes X-X, XI-XI, XII-XII et XIII-XIII matérialisées aux figures 6 et 7 ;
- la figure 14 est une vue en perspective de la partie supérieure d'une armoire selon une variante de l'invention ;
- la figure 15 est un agrandissement de l'encart XV de la figure 14.

### DESCRIPTION DETAILLEE D'UN EXEMPLE DE REALISATION

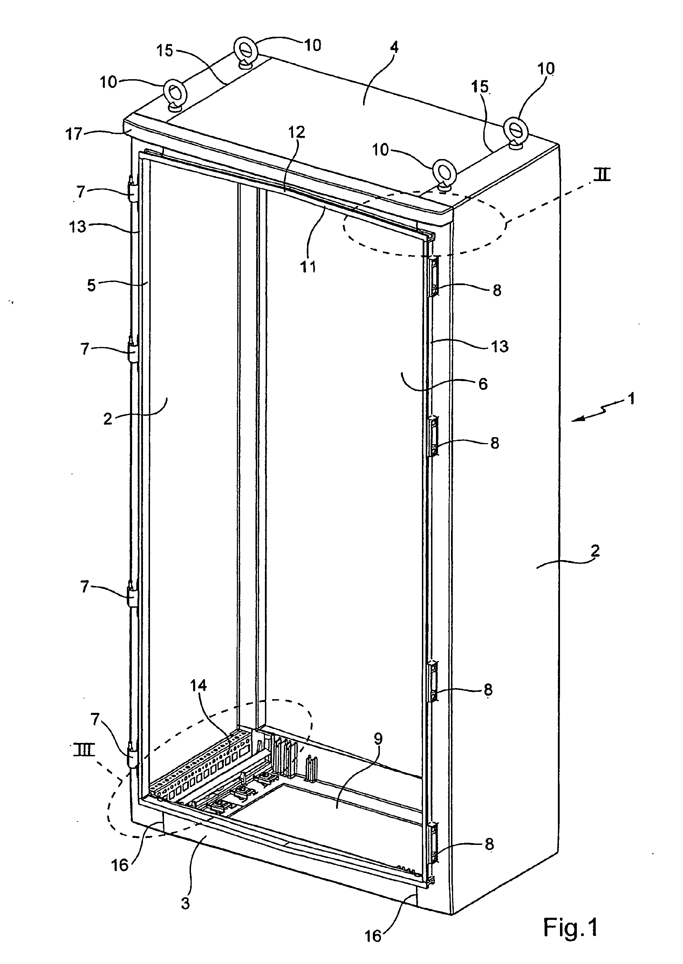

L'armoire 1 pour appareillage électrique des figures 1 à 3 comporte une enveloppe parallélépipédique formée de deux panneaux latéraux 2 rattachés par chacun de leurs coins respectivement à un premier panneau 3 formant le socle de l'armoire et un deuxième panneau 4 formant le toit de l'armoire 1.

Les rebords des panneaux latéraux 2, du panneau de socle 3 et du panneau de toit 4 sont adaptés à former, lorsque l'armoire est assemblée comme représenté sur figure 1, un cadre 5 saillant vers l'extérieur et entourant une ouverture 6 d'accès au contenu de l'armoire et ce, sur les deux faces opposées de l'armoire 1 qui sont disposées entre les panneaux latéraux 2.

L'armoire 1 de la figure 1 comporte ainsi deux ouvertures 6 mais peut, de manière plus classique, n'en conserver qu'une pour l'accès au contenu de l'armoire 1 tandis que l'ouverture 6 opposée est obstruée par un panneau de fond (non représenté).

Quoi qu'il en soit, l'ouverture 6 est destinée à être fermée par une porte (non représentée) qui peut être montée pivotante sur les charnières 7 portées par le cadre 5 le long d'un des panneaux latéraux 2.

L'armoire 1 reçoit également sur le cadre 5, le long de l'autre panneau latéral 2, des fixations 8 adaptées à recevoir des moyens de maintien de la porte en position fermée contre le cadre 5, tels que des aimants ou des crochets (non représentés).

Le cadre 5 peut coopérer avec la porte par l'intermédiaire d'un joint d'étanchéité de sorte que la porte puisse fermer hermétiquement l'ouverture 6.

Le socle 3 de l'armoire 1 comporte en son milieu une ouverture rectangulaire 9 permettant la desserte par le sol des appareillages électriques de l'armoire 1, ce socle 3 étant destiné à être fixé sur le sol.

Le panneau de toit 4 est identique au panneau de socle 3 à ceci près qu'il ne comporte pas d'ouverture 9, afin de protéger le contenu de l'armoire 1, par exemple de la pluie.

L'armoire 1 comporte sur la figure 1 quatre anneaux d'élinguage 10 saillants des deux panneaux latéraux 2. Le soulèvement de l'armoire, éventuellement déjà équipée de son appareillage électrique, s'effectue par ces anneaux 10 en vue de la mise en place ou du retrait de l'armoire à un emplacement spécifique.

Le cadre 5, en plus de sa fonction de coopération avec la porte de l'armoire 1, joue un rôle de gouttière permettant d'évacuer les fluides s'écoulant sur l'armoire, notamment la pluie, lorsque l'armoire est installée en extérieur.

La partie du cadre 5 portée par le panneau de toit 4 est une gouttière 11 s'étendant sur toute la largeur du panneau de toit 4. La gouttière 11 comporte un point culminant 12 en son milieu de sorte que l'eau peut s'écouler par les pentes de part et d'autre de ce point culminant 12 en direction des coins du cadre 5.

Les éléments du cadre 5 portés par les panneaux latéraux 2 sont des goulottes 13 permettant la descente du fluide le long des panneaux latéraux 2.

Lorsqu'un fluide tel que la pluie s'écoule sur l'armoire 1, l'écoulement est ainsi dévié de l'ouverture 6 par la gouttière 11 et les goulottes 13, ce qui garantit un maintien de l'étanchéité entre le cadre 5 et le joint de la porte.

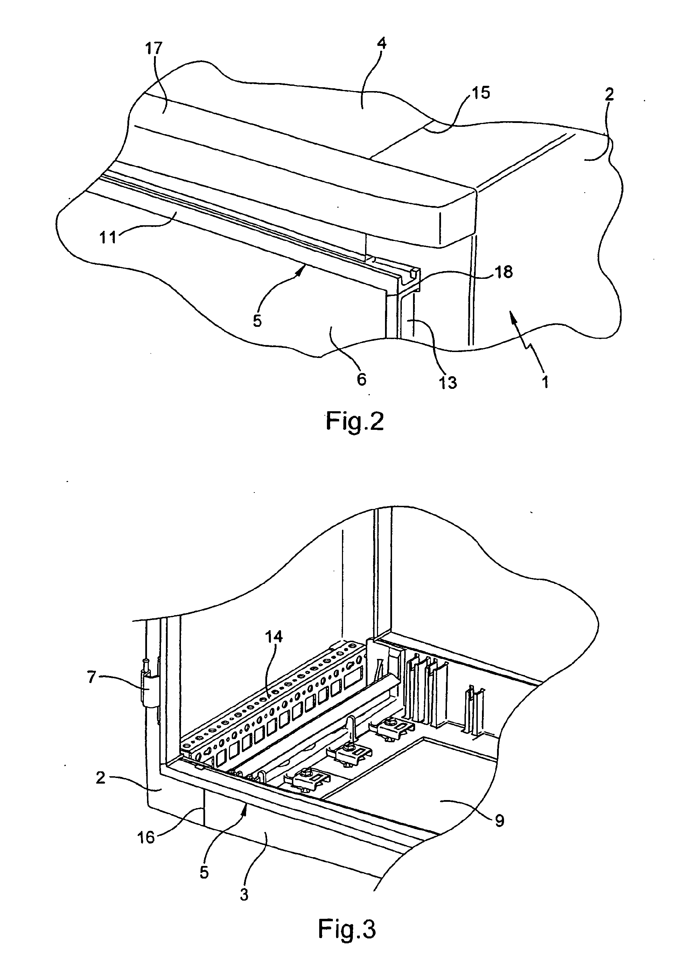

La figure 2 montre en détail la liaison entre la gouttière 11 et une goulotte 13 au niveau d'une jointure 18 oblique.

Les panneaux latéraux 2 et le panneau de toit 4 sont assemblés le long d'une jointure 15 visible sur le dessus de l'armoire 1.

De même, l'assemblage du panneau de socle 3 avec les panneaux latéraux 2 se fait le long d'une jointure 16.

L'armoire 1 comporte également une casquette 17 fixée sur la partie supérieure de l'armoire 1 et s'étendant sur toute la largeur de l'armoire 1. Cette casquette 17 assure une protection supplémentaire contre les fluides d'écoulement tels que la pluie.

En référence à la figure 3, l'armoire 1 comporte dans son coin inférieur gauche un rail de fixation 14. Bien que les autres coins de l'armoire 1 ne soient pas visibles sur la figure 1, les quatre coins de cette armoire 1 comportent un rail de fixation 14 tel que celui représenté à la figure 3.

Le rail de fixation 14 comporte une multitude de perforations permettant le montage des appareillages électriques dans l'armoire. Ces rails de fixation 14 sont généralement employés pour monter dans l'armoire une plaque de fixation (non représentée) perforée ou pleine, la plus grande possible en fonction de l'espace intérieur disponible dans l'armoire 1. Chaque coin de la plaque de fixation est fixé sur les rails 14, éventuellement à l'aide de pattes de fixation. Ces plaques de fixation sont destinées à supporter l'appareillage électrique, de manière classique dans ce type d'armoire.

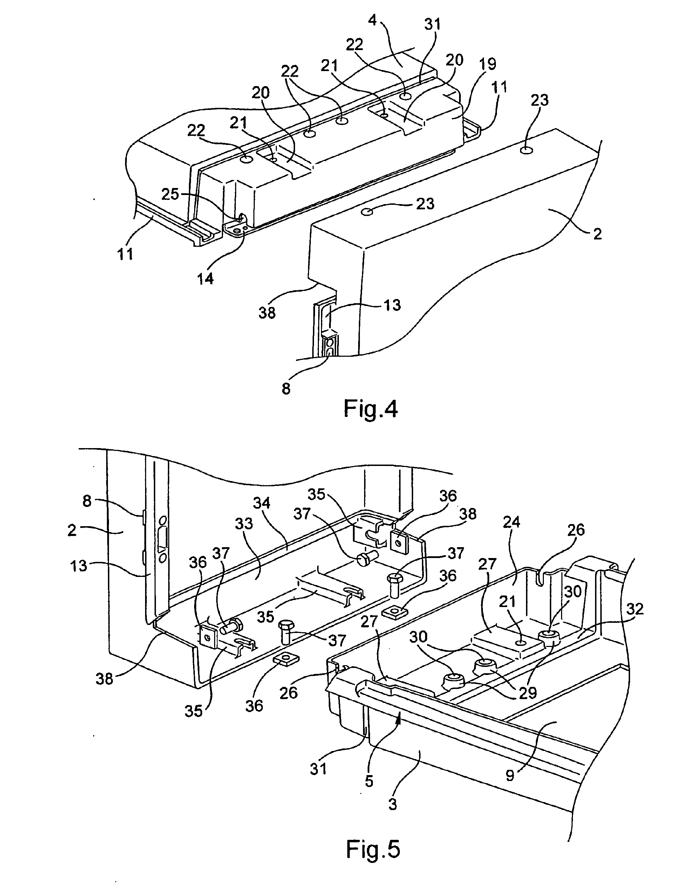

Les figures 4 et 5 sont des vues éclatées permettant de rendre compte des formes complémentaires des panneaux latéraux 2, du panneau de socle 3 et du panneau de toit 4.

Sur la figure 4, le panneau de toit 4 comporte un tenon 19 prolongeant le panneau de toit 4 selon l'orientation générale de ce dernier, c'est-à-dire qu'ici le panneau de toit 4, qui est disposé horizontalement, est prolongé horizontalement au niveau de chacune de ses extrémités par un tenon 19.

Le tenon 19 visible sur la figure 4 comporte deux rainures 20 s'étendant également selon l'orientation générale du panneau de toit 4. Un trou traversant 21 est pratiqué dans le fond de chacune des rainures 20.

Le tenon 19 comporte également quatre autres trous traversants 22 destinés à la fixation des anneaux d'élinguage 10 ou de tout autre équipement.

Le tenon 19 du panneau de toit 4 comporte deux fentes latérales 25 (une seule est visible sur la figure 4) prévues pour des moyens de maintien en position du tenon 19 dans son logement du panneau latéral 2 correspondant.

En ce qui concerne la fixation des anneaux d'élinguage 10, les panneaux latéraux 2 comportent sur leur partie supérieure deux orifices 23 disposés de telle sorte qu'ils soient en vis-à-vis de deux des trous traversants 22 lorsque les panneaux latéraux 2 et le panneau de toit 4 sont assemblés.

Les panneaux latéraux 2 peuvent également être livrés sans les orifices 23, ce qui permet de garder étanche la partie supérieure de ces panneaux. Dans ce cas, les orifices 23 peuvent être percés seulement si l'armoire est destinée à être élinguée.

Comme exposé précédemment, le panneau de socle 3 est identique au panneau de toit 4, si ce n'est l'ouverture 9 du panneau de socle 3. Il en est de même en ce qui concerne le tenon 19 du panneau de toit 4, le panneau de socle 3 comportant également un tenon 24 identique au tenon 19 du panneau de toit 4.

La figure 5 montre que le tenon 24 est creux et comporte également deux fentes latérales 26.

Le tenon 24 comporte également deux empreintes 27 définissant des rainures identiques aux rainures 20 du tenon 19 du panneau de toit 4. De même, un trou traversant 21 est pratiqué dans chacune de ces empreintes 27.

Des fûts 29 sont par ailleurs prévus dans le tenon 24 pour prolonger les trous traversants 30, qui sont identiques aux trous traversants 22 du tenon 19 du panneau de toit 4, de manière que les trous traversants 30 et les trous traversants 21 débouchent tous dans un même plan.

Les tenons 19 et 24 comportent de plus une rigole 31 d'écoulement de fluide. Cette rigole 31 est directement visible à la figure 4 et encadre le tenon 19 à partir de l'une des gouttières 11 jusqu'à l'autre gouttière 11 opposée. Cette rigole 31 permet d'acheminer un fluide vers l'une et l'autre des gouttières 11 en vue de son évacuation et comporte à cet effet un point culminant en son milieu, de même que pour la gouttière 11.

La rigole 31 n'est pas directement visible sur la figure 5 mais une empreinte 32 définissant la rigole 31 en négatif, rend compte de son cheminement.

Les figures 4 et 5 montrent également les portions des panneaux latéraux 2 qui coopèrent avec les tenons 19, 24.

En référence à la figure 5, le panneau latéral 2 comporte un logement 33 délimité par une nervure interne 34 et comportant quatre logements 35 destinés chacun à recevoir et maintenir un insert fileté 36 pour leur coopération avec des vis 37.

Les vis 37 forment des moyens de maintien en position du tenon 24 dans son logement 33 et ont ici également pour fonction de fixer le rail 14 au tenon 24. En effet, lorsque le panneau de socle 3 (il en va de même pour le panneau de toit 4) est assemblé à un panneau latéral 2, le tenon 24 est inséré dans son logement 33 tandis qu'une vis 37 traverse chacun des trous 21 et chacune des fentes latérales 26 pour être vissée dans son insert fileté 36 du logement 33 correspondant.

Les panneaux latéraux 2 comportent également, de part et d'autre du logement 33, deux échancrures 38 permettant le passage de la gouttière 11 lorsque le tenon 19, 24 est en place dans son logement 33, de manière que la jonction de la gouttière 11 et des goulottes 13 puisse être réalisée.

Lorsque les panneaux latéraux 2 sont assemblés au panneau de socle 3 et au panneau de toit 4, les rails 14 peuvent être disposés sur les empreintes 27 et les fûts 29 et être maintenus par tout moyen approprié ou, par exemple, directement par les vis 37 qui traversent alors le rail 14 en plus de la paroi du tenon 19, 24 correspondant.

L'emboîtement du tenon 19, 24 dans son logement 33 permet de supporter l'essentiel des efforts à transmettre d'un panneau à l'autre. Les vis 37 ne servent qu'à maintenir en position le tenon dans son logement pour éviter à l'assemblage de se déboîter. Les logements 35 n'ont par conséquent pas besoin de renfort particulier et les inserts filetés 36 peuvent être réalisés dans une fine tôle métallique afin de réduire la profondeur des rainures 20 et leur empreinte correspondante 27.

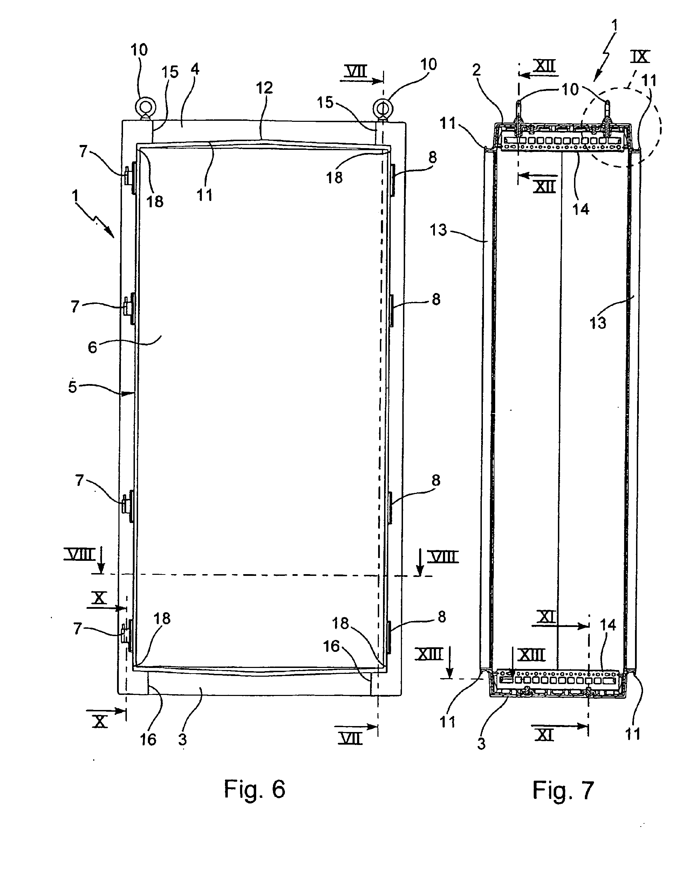

La figure 6 montre l'armoire 1 de la figure 1 de face. La casquette 17 n'est pas représentée sur cette figure pour faire apparaître la symétrie entre l'assemblage du panneau de socle 3 avec les panneaux latéraux 2 et l'assemblage du panneau de toit 4 avec les panneaux latéraux 2.

La figure 7 montre l'armoire 1 de la figure 6 de côté, selon la coupe VII-VII.

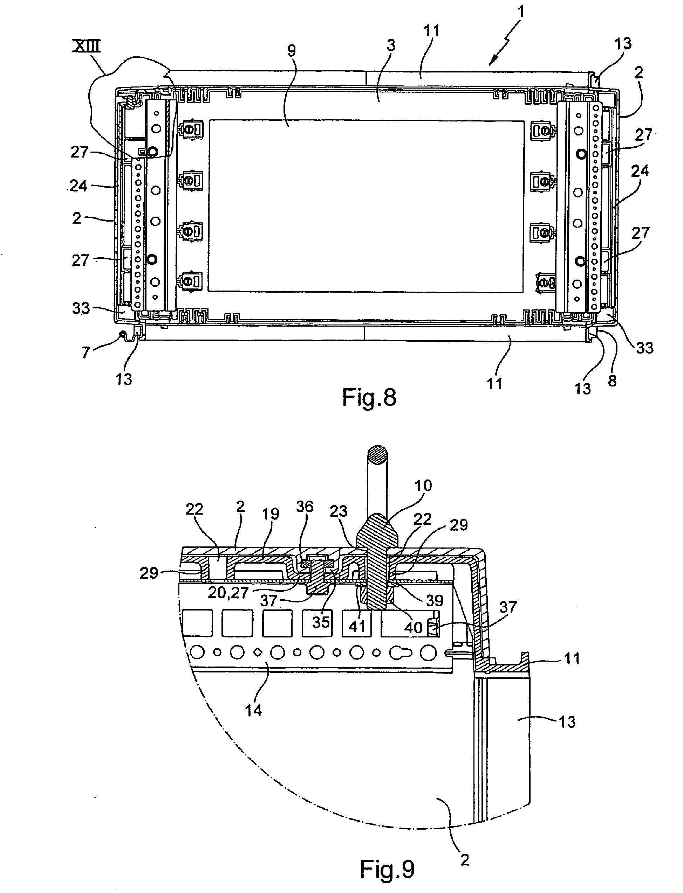

La figure 8 est une vue de dessus de l'armoire 1 de la figure 6 selon la coupe VIII-VIII de la figure 6. Cette représentation permet une vue de dessus de l'assemblage des tenons 24 du panneau de socle 3 avec les logements 33 des panneaux latéraux 2.

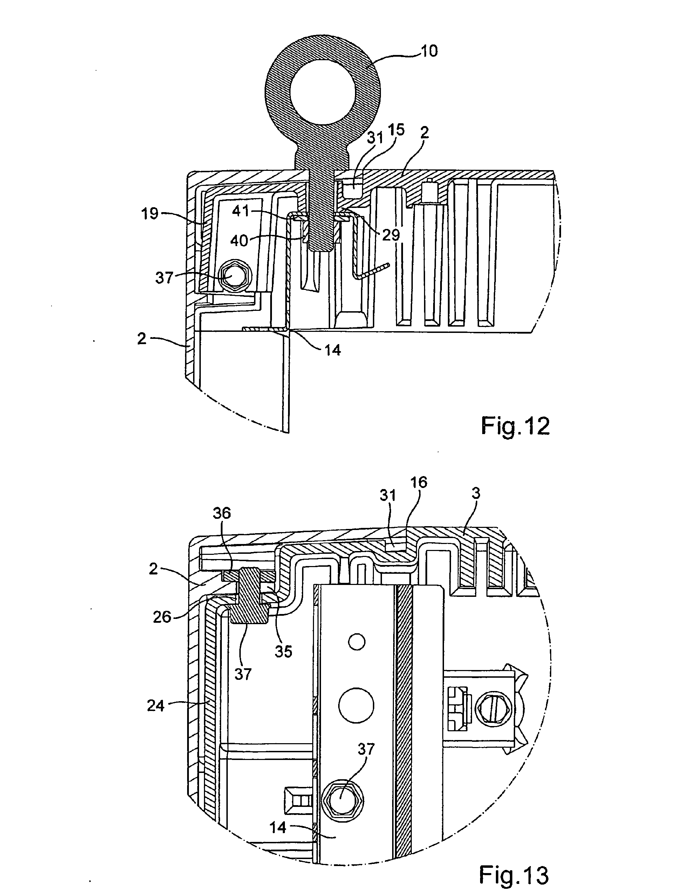

La figure 8 comporte dans son coin supérieur gauche un arraché XIII correspondant à la coupe partielle XIII-XIII de la figure 7 et montré en agrandissement sur la figure 13.

La figure 9 est un agrandissement de l'encadré IX de la figure 7. Cette figure montre le montage du panneau de toit 4 et d'un panneau latéral 2 maintenu par les vis 37 une fois l'assemblage des figures 4 et 5 réalisé. Sur cette figure 9, les éléments du panneau de toit 4 qui sont communs avec le panneau de socle 3 (et donc visibles sur la figure 5) portent les mêmes numéros de référence.

Le panneau de toit 4 apparaît ici par l'intermédiaire d'un de ses tenons 19 inséré dans le panneau latéral 2 et maintenu par les vis 37 dont l'une de ces vis apparaît ici en coupe. La vis 37 vue en coupe traverse successivement le rail 14, l'empreinte 27 formant la rainure 20, le logement 35 et l'insert fileté 36 pour maintenir transversalement l'ensemble en place.

La distance entre le rail 14 et le panneau latéral 2 est ainsi déterminée par les épaisseurs respectives du panneau latéral 2 et du tenon 19, et par la hauteur des fûts 29 et des empreintes 27 qui déterminent la surface contre laquelle vient s'appliquer le rail 14.

Le rail 14 est très proche du panneau latéral 2 qui constitue ici la paroi externe de l'armoire 1, grâce à l'épaisseur réduite des logements 35 recevant les inserts filetés 36.

La figure 9 montre également le montage d'un anneau d'élinguage 10. Ce montage comporte ainsi un anneau d'élinguage 10 qui traverse la paroi du panneau latéral 2 à travers l'orifice 23, et qui traverse le trou 22 d'un fût 29 et débouche à la sortie de ce fût 29 dans un trou 39 pratiqué dans le rail 14. L'anneau d'élinguage 10 est maintenu en position grâce à un écrou 40 et une rondelle 41.

L'anneau d'élinguage 10 est ainsi en prise directement sur le rail et, lors du soulèvement de l'armoire 1 par des anneaux d'élinguage 10 montés de cette manière, le poids des équipements montés sur des supports rattachés au rail 14 est directement pris en charge par l'anneau d'élinguage 10.

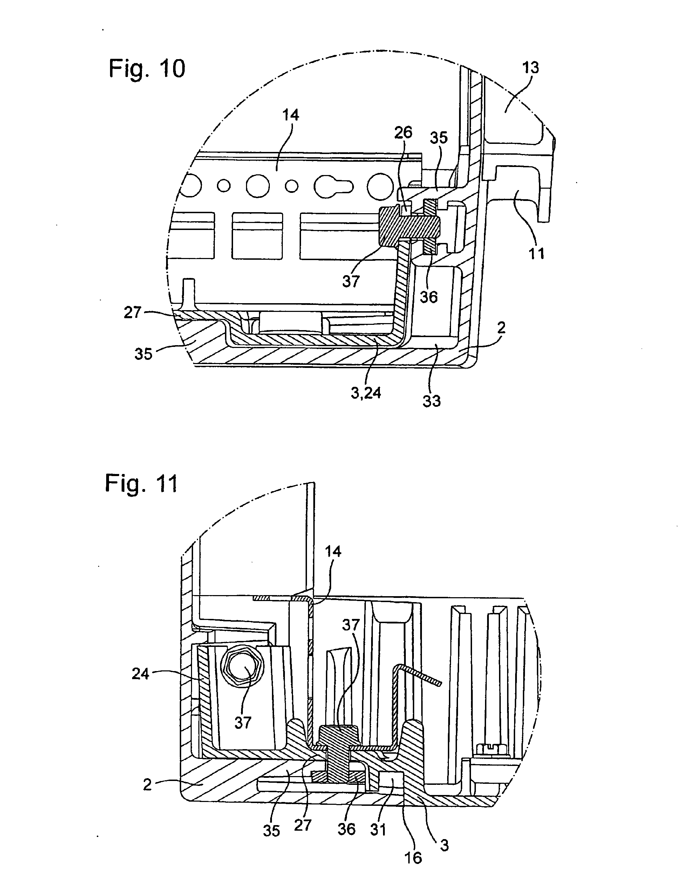

La figure 10 est une vue selon la coupe partielle X-X de la figure 6. Cette figure montre le maintien en position du tenon 24 du panneau de socle 3 dans son logement 33 du panneau latéral 2.

La vis 37 qui est vue en coupe sur cette figure permet la fixation des bords du tenon 24, par l'intermédiaire des fentes latérales 26, dans les logements 35 disposés à chaque extrémité du logement 33.

La figure 11 est une vue partielle de la figure 7 selon la coupe XI-XI. Cette figure montre le maintien en position de l'assemblage du panneau de socle 3 avec l'un des panneaux latéraux 2, de manière similaire au montage de la figure 9. La vis 37 qui est ici vue en coupe est l'une des vis qui maintient également en place le rail 14.

La figure 12, quant à elle, montre le montage du rail 14 dans la partie supérieure de l'armoire 1. La figure 12 est une vue selon la coupe XII-XII de la figure 7 et montre par conséquent la coopération du rail 14 et de l'anneau d'élinguage 10.

La figure 13 représente l'armoire 1 de la figure 8 selon la coupe XIII-XIII de la figure 7. La vis 37 qui apparaît ici en coupe est la même que celle qui apparaît en coupe sur la figure 10 mais selon un autre angle de vue. Cette figure 13 montre le maintien en position des bords du tenon 24 sur le panneau latéral 2.

L'armoire 1 qui vient d'être décrite présente les propriétés indiquées ci-après.

Une fois l'assemblage des panneaux latéraux 2, du panneau de socle 3 et du panneau de toit 4 réalisé, ces éléments forment une enveloppe destinée à protéger le contenu de l'armoire 1. Le volume de cette enveloppe est exploité au maximum dans la mesure où les rails 14 sont montés chacun au plus près du coin correspondant de l'enveloppe.

Les logements 35 des panneaux latéraux 2 présentent un encombrement réduit au minimum et n'ont pour fonction que de maintenir l'emboîtement des tenons 19, 24 dans les logements 33. La rigidité du montage entre les panneaux de socle 3 ou de toit 4 avec les panneaux latéraux 2 est alors assurée par le contact direct des tenons 19, 14 avec le logement 33, comme illustré sur les figures 9 à 13.

Dans le cas où l'armoire 1 est destinée à être étanche, les jointures 15 entre le panneau de toit 4 et les panneaux latéraux 2 débouchent dans une rigole 31 adaptée à canaliser un fluide qui se serait infiltré par la jointure 16 en direction de la gouttière 11 puis de la goulotte 13. Les jointures 15, bien qu'étant disposées sur le dessus de l'armoire 1, ne permettent ainsi pas l'infiltration de fluide à l'intérieur de l'enveloppe de l'armoire 1, et ce sans avoir recours à un joint d'étanchéité.

Un joint d'étanchéité peut néanmoins être prévu au niveau de la jointure 15, la rigole 31 n'intervenant alors qu'en cas de défaillance de ce joint d'étanchéité.

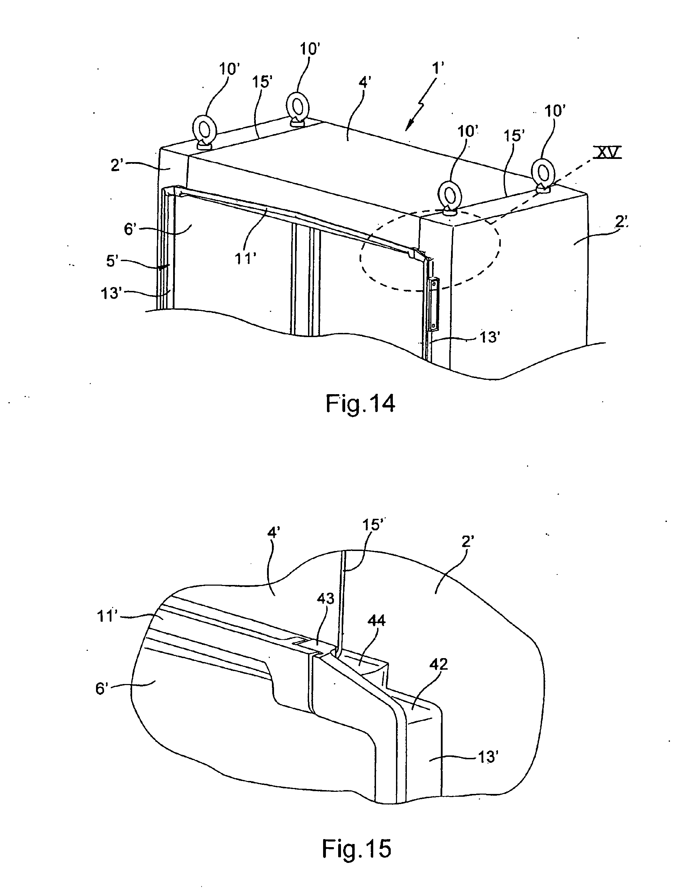

Les figures 14 et 15 se rapportent à une variante de l'invention dont les éléments communs à l'armoire des figures 1 à 13 portent le même repère numérique suivi d'un prime.

La figure 14 est une vue partielle en perspective de la partie supérieure d'une armoire selon cette variante. L'armoire 1' comporte deux panneaux latéraux 2' reliés par un panneau de toit 4' et présente une ouverture 6' délimitée sur son pourtour par un cadre 5'.

Le cadre 5' est constitué d'une gouttière 11' portée par le panneau de toit 4' ainsi que deux goulottes 13' portées par les panneaux latéraux 2'.

L'assemblage du panneau de toit 4' et des panneaux latéraux 2' se fait au moyen de tenons prolongeant le panneau de toit 4', de la même manière que l'armoire 1 des figures 1 à 13. Il en va de même pour le montage des anneaux d'élinguage 10'.

Dans la variante de la figure 14, l'armoire 1' comporte un panneau de toit 4' dont la gouttière 11' s'étend uniquement entre les deux jointures 15'.

La figure 15 est une vue agrandie de l'encart XV de la figure 14 et montre la coopération de la gouttière 11' avec une goulotte 13' au niveau de la jointure 15'.

La goulotte 11' ne s'étendant pas au-delà de la jointure 15', la goulotte 13' comporte une portion 42 horizontale rejoignant l'extrémité de la gouttière 11' au niveau de la jointure 15'. La portion 42 comporte à son extrémité une pince de jonction 43 permettant une liaison continue entre la gouttière 11' et la goulotte 13'.

De même que pour l'armoire 1 des figures 1 à 13, une rigole (non visible sur les figures 14 et 15) est disposée sous la jointure 15' et débouche ici dans la portion 42 par l'intermédiaire d'un bec 44.

La liaison entre la gouttière 11' et la goulotte 13' peut optionnellement comporter un joint d'étanchéité.

Des variantes de réalisation de l'armoire peuvent être envisagées sans pour autant sortir du cadre de l'invention. Notamment, les tenons 19, 24 prolongeant les panneaux de socle 3 et de toit 4 peuvent être des pièces rapportées sur lesdits panneaux et peuvent être d'une forme autre que celle du présent exemple dans la mesure où ces tenons permettent un assemblage supportant les efforts de levage entre les panneaux latéraux et les panneaux de socle ou de toit.

## Revendications

1. Armoire (1) pour appareillage électrique formée d'une enveloppe présentant une ouverture (6) délimitée par un cadre (5), cette enveloppe comportant deux panneaux latéraux (2) reliés chacun par l'une de leurs extrémités à un premier panneau (3) et par l'autre de leurs extrémités à un deuxième panneau (4), le premier panneau (3) et le deuxième panneau (4) comportant à chacune de leurs extrémités un tenon (24, 19) prolongeant le panneau selon l'orientation générale de ce dernier, chacun de ces tenons (24, 19) étant inséré dans un logement (33) du panneau latéral (2) correspondant, chacun de ces logements (33) formant une mortaise pour le tenon (24, 19) correspondant ; **caractérisée en ce que**, pour chacun desdits tenons (24, 19), des moyens (37) de maintien en position du tenon (24, 19) dans son logement (33) sont disposés transversalement à ladite orientation générale du premier (3) ou deuxième (4) panneau correspondant, chacun des tenons étant creux et chacun des logements étant formé par un coin du panneau latéral (2) correspondant.

2. Armoire selon la revendication 1, **caractérisée en ce qu'**au moins l'un desdits tenons est délimité par une paroi située sensiblement dans le prolongement de la paroi du premier (3) ou deuxième (4) panneau correspondant.

3. Armoire selon la revendication 2, **caractérisé en ce que** ladite paroi comporte des trous traversants (21) à travers lesquels sont disposés lesdits moyens (37) de maintien en position.

4. Armoire selon l'une des revendications 1 à 3, **caractérisée en ce qu'**au moins l'un des tenons (24, 19) est délimité par une paroi transversale à ladite orientation générale.

5. Armoire selon la revendication 4, **caractérisée en ce que** ladite paroi transversale comporte un trou traversant (26) à travers lequel sont disposés lesdits moyens (37) de maintien en position.

6. Armoire selon l'une des revendications 1 à 5, **caractérisée en ce qu'**au moins l'un des tenons (24, 19) comporte une rainure (20) complémentaire d'une empreinte (35) portée par le logement (33) du panneau latéral (2) correspondant.

7. Armoire selon la revendication 6, **caractérisée en ce que** ladite rainure (20) et ladite empreinte (35) sont orientées selon ladite orientation générale.

8. Armoire selon l'une des revendications 6 et 7, **caractérisée en ce qu'**un trou traversant (21) est pratiqué dans le fond de ladite rainure (20), lesdits moyens (37) de maintien en position étant disposés à travers ledit trou traversant (21).

9. Armoire selon l'une des revendications 1 à 8, **caractérisée en ce qu'**au moins l'un des tenons (24, 19) comporte une pluralité de fûts (29) présentant chacun un trou traversant (30), et **en ce que** lesdits trous traversants (30) débouchent tous sensiblement dans un même plan.

10. Armoire selon l'une des revendications 1 à 9, **caractérisée en ce qu'**au moins l'un des tenons (24, 19) comporte, au niveau de la jonction (15) d'un panneau latéral (2) et du premier (3) ou du deuxième (4) panneau correspondant, une rigole (31) adaptée à l'écoulement d'un fluide en direction du cadre (5).

11. Armoire selon la revendication 10, **caractérisée en ce que** le cadre (5) comporte une gouttière (11) communiquant avec la rigole (31).

12. Armoire selon la revendication 11, **caractérisée en ce que** la gouttière (11) est reliée à une goulotte (13) portée par un panneau latéral (2).

13. Armoire selon l'une des revendications 1 à 12, **caractérisée en ce que** le logement (33) est délimité par une nervure (34) contre laquelle est disposé le tenon (24, 19) correspondant.

14. Armoire selon l'une des revendications 1 à 13, **caractérisée en ce que** le logement (33) comporte un logement (35) recevant un insert de fixation (36).

15. Armoire selon l'une des revendications 1 à 14, **caractérisée en ce que** lesdits moyens de maintien comportent une vis (37) traversant le tenon (24, 19) correspondant et fixée au panneau latéral (2) correspondant.

16. Armoire selon l'une des revendications 1 à 15, **caractérisée en ce qu'**elle comporte en outre au moins un rail de fixation (14) dans l'un des coins de l'enveloppe (5).

17. Armoire selon la revendication 16, **caractérisée en ce que** ledit rail de fixation (14) est fixé au tenon (24, 19) correspondant par lesdits moyens (37) de maintien en position.

18. Armoire selon l'une des revendications 16 et 17, **caractérisée en ce qu'**elle comporte en outre un anneau d'élinguage traversant le panneau latéral (2) correspondant, le tenon (24, 19) correspondant et ledit rail de fixation (14)**.**

19. Armoire selon l'une des revendications 1 à 18, **caractérisée en ce que** ledit premier panneau est un panneau de socle (3).

20. Armoire selon l'une des revendications 1 à 19, **caractérisée en ce que** ledit deuxième panneau est un panneau de toit (4).

## Patentansprüche

1. Schrank (1) für Schaltgeräte, der aus einem Gehäuse mit einer von einem Rahmen (5) umgrenzten Öffnung (6) gebildet ist, wobei das Gehäuse zwei Seitenplatten (2) umfasst, die jeweils mit einem ihrer Enden mit einer ersten Platte (3) und mit dem anderen Ende mit einer zweiten Platte (4) verbunden sind, wobei die erste Platte (3) und die zweite Platte (4) an jedem ihrer Enden einen Zapfen (24, 19) aufweisen, der die Platte in ihrer allgemeinen Ausrichtung verlängert, wobei jeder der Zapfen (24, 19) in eine Aufnahme (33) der entsprechenden Seitenplatte (2) eingeführt ist, wobei jede der Aufnahmen (33) einen Schlitz für den entsprechenden Zapfen (24, 19) bildet,
**dadurch gekennzeichnet, dass** für jeden Zapfen (24, 19) Mittel (37) zur Lagebeibehaltung des Zapfens (24, 19) in seiner Aufnahme (33) quer zur allgemeinen Ausrichtung der entsprechenden ersten (3) und zweiten (4) Platte angeordnet sind, wobei jeder Zapfen hohl ist und jede Aufnahme von einer Ecke der entsprechenden Seitenplatte (2) gebildet ist.

2. Schrank nach Anspruch 1,
**dadurch gekennzeichnet, dass** wenigstens einer der Zapfen von einer Wand begrenzt wird, die im Wesentlichen in der Verlängerung der Wand der entsprechenden ersten (3) oder zweiten (4) Platte liegt.

3. Schrank nach Anspruch 2,
**dadurch gekennzeichnet, dass** die Wand durchgehende Öffnungen (21) aufweist, durch die hindurch die Mittel (37) zur Lagebeibehaltung angeordnet sind.

4. Schrank nach einem der Ansprüche 1 bis 3,
**dadurch gekennzeichnet, dass** wenigstens einer der Zapfen (24, 19) von einer zur allgemeinen Ausrichtung quer verlaufenden Wand begrenzt wird.

5. Schrank nach Anspruch 4,
**dadurch gekennzeichnet, dass** die Querwand eine durchgehende Öffnung (26) aufweist, durch die hindurch die Mittel (37) zur Lagebeibehaltung angeordnet sind.

6. Schrank nach einem der Ansprüche 1 bis 5,
**dadurch gekennzeichnet, dass** wenigstens einer der Zapfen (24, 19) eine Nut (20) aufweist, die zu einer Vertiefung (35) komplementär ist, welche sich auf der Aufnahme (33) der entsprechenden Seitenplatte (2) befindet.

7. Schrank nach Anspruch 6,
**dadurch gekennzeichnet, dass** die Nut (20) und die Vertiefung (35) gemäß der allgemeinen Ausrichtung ausgerichtet sind.

8. Schrank nach einem der Ansprüche 6 und 7,
**dadurch gekennzeichnet, dass** eine durchgehende Öffnung (21) im Boden der Nut (20) ausgebildet ist, wobei die Mittel (37) zur Lagebeibehaltung durch die durchgehende Öffnung (21) hindurch angeordnet sind.

9. Schrank nach einem der Ansprüche 1 bis 8,
**dadurch gekennzeichnet, dass** wenigstens einer der Zapfen (24, 19) eine Vielzahl von Schäften (29) mit jeweils einer durchgehenden Öffnung (30) aufweist, und dass die durchgehenden Öffnungen (30) alle im Wesentlichen in ein und dieselbe Ebene münden.

10. Schrank nach einem der Ansprüche 1 bis 9,
**dadurch gekennzeichnet, dass** wenigstens einer der Zapfen (24, 19) an der Verbindung (15) zwischen einer Seitenplatte (2) und der entsprechenden ersten (3) oder zweiten (4) Platte eine Ablaufrinne (31) aufweist, die für das Ablaufen einer Rüssigkeit in Richtung des Rahmens (5) geeignet ist.

11. Schrank nach Anspruch 10,
**dadurch gekennzeichnet, dass** der Rahmen (5) eine mit der Ablaufrinne (31) in Verbindung stehende Rinne (11) aufweist.

12. Schrank nach Anspruch 11,
**dadurch gekennzeichnet, dass** die Rinne (11) mit einer auf einer Seitenplatte (2) befindlichen Ablaufrinne (13) verbunden ist.

13. Schrank nach einem der Ansprüche 1 bis 12,
**dadurch gekennzeichnet, dass** die Aufnahme (33) von einer Rippe (34) begrenzt wird, gegen die der entsprechende Zapfen (24, 19) angeordnet ist.

14. Schrank nach einem der Ansprüche 1 bis 13,
**dadurch gekennzeichnet, dass** die Aufnahme (33) eine einen Befestigungseinsatz (36) aufnehmende Aufnahme (35) aufweist.

15. Schrank nach einem der Ansprüche 1 bis 14,
**dadurch gekennzeichnet, dass** die Haltemittel eine Schraube (37) umfassen, die durch den entsprechenden Zapfen (24, 19) hindurch verläuft und an der entsprechenden Seitenplatte (2) befestigt ist.

16. Schrank nach einem der Ansprüche 1 bis 15,
**dadurch gekennzeichnet, dass** er ferner wenigstens eine Befestigungsschiene (14) in einer der Ecken des Gehäuses (5) umfasst.

17. Schrank nach Anspruch 16,
**dadurch gekennzeichnet, dass** die Befestigungsschiene (14) an dem entsprechenden Zapfen (24, 19) durch die Mittel (37) zur Lagebeibehaltung befestigt ist.

18. Schrank nach einem der Ansprüche 16 und 17,
**dadurch gekennzeichnet, dass** er ferner einen Hebering aufweist, der die entsprechende Seitenplatte (2), den entsprechenden Zapfen (24, 19) und die Befestigungsschiene (14) durchquert.

19. Schrank nach einem der Ansprüche 1 bis 18,
**dadurch gekennzeichnet, dass** die erste Platte eine Sockelplatte (3) ist.

20. Schrank nach einem der Ansprüche 1 bis 19,
**dadurch gekennzeichnet, dass** die zweite Platte eine Abdeckplatte (4) ist.

## Claims

1. Cabinet (1) for electrical equipment formed from a casing having an opening (6) delimited by a frame (5), said casing comprising two lateral panels (2) which are each connected by one end thereof to a first panel (3) and by the other end thereof to a second panel (4), the first panel (3) and the second panel (4) comprising at each end thereof a tenon (24, 19) extending the panel in the general orientation thereof, each of said tenons (24, 19) being inserted in a recess (33) of the corresponding lateral panel (2), each of said recesses (33) forming a mortise for the corresponding tenon (24, 19); **characterised in that**, for each of said tenons (24, 19), means (37) for holding the tenon (24, 19) in position in its recess (33) are arranged transverse to said general orientation of the first (3) or second (4) corresponding panel, each of the tenons being hollow and each of the recesses being formed by a corner of the corresponding lateral panel (2).

2. Cabinet according to claim 1, **characterised in that** at least one of said tenons is delimited by a wall located substantially in the extension of the wall of the first (3) or second (4) corresponding panel.

3. Cabinet according to claim 2, **characterised in that** said wall comprises through-holes (21) through which said means (37) for holding in position are arranged.

4. Cabinet according to any of claims 1 to 3, **characterised in that** at least one of the tenons (24, 19) is delimited by a wall which is transverse to said general orientation.

5. Cabinet according to claim 4, **characterised in that** said transverse wall comprises a through-hole (26) through which said means (37) for holding in position are arranged.

6. Cabinet according to any of claims 1 to 5, **characterised in that** at least one of the tenons (24, 19) comprises a groove (20) which is complementary to an indentation (35) in the recess (33) of the corresponding lateral panel (2).

7. Cabinet according to claim 6, **characterised in that** said groove (20) and said indentation (35) are oriented according to said general orientation.

8. Cabinet according to either claim 6 or claim 7, **characterised in that** a through-hole (21) is made in the bottom of said groove (20), said means (37) for holding in position being arranged through said through-hole (21).

9. Cabinet according to any of claims 1 to 8, **characterised in that** at least one of the tenons (24, 19) comprises a plurality of shafts (29) each having a through-hole (30), and **in that** said through-holes (30) all open substantially into the same plane.

10. Cabinet according to any of claims 1 to 9, **characterised in that** at least one of the tenons (24, 19) comprises, at the junction (15) of a lateral panel (2) and of the first (3) or of the second (4) corresponding panel, a channel (31) adapted to the flow of a fluid towards the frame (5).

11. Cabinet according to claim 10, **characterised in that** the frame (5) comprises a gutter (11) which communicates with the channel (31).

12. Cabinet according to claim 11, **characterised in that** the gutter (11) is connected to a trough (13) in a lateral panel (2).

13. Cabinet according to any of claims 1 to 12, **characterised in that** the recess (33) is delimited by a rib (34) against which the corresponding tenon (24, 19) is arranged.

14. Cabinet according to any of claims 1 to 13, **characterised in that** the recess (33) comprises a recess (35) receiving a fixing insert (36).

15. Cabinet according to any of claims 1 to 14, **characterised in that** said holding means comprise a screw (37) which passes through the corresponding tenon (24, 19) and is fixed to the corresponding lateral panel (2).

16. Cabinet according to any of claims 1 to 15, **characterised in that** it further comprises at least one fixing rail (14) in one of the corners of the casing (5).

17. Cabinet according to claim 16, **characterised in that** said fixing rail (14) is fixed to the corresponding tenon (24, 19) by said means (37) for holding in position.

18. Cabinet according to either claim 16 or claim 17, **characterised in that** it further comprises a lifting ring passing through the corresponding lateral panel (2), the corresponding tenon (24, 19) and said fixing rail (14).

19. Cabinet according to any of claims 1 to 18, **characterised in that** said first panel is a base panel (3).

20. Cabinet according to any of claims 1 to 19, **characterised in that** said second panel is a roof panel (4).
